(19) Europäisches Patentamt
European Patent Office
Office européen des brevets

(11) **EP 4 790 629 A1**

(12) **EUROPEAN PATENT APPLICATION**

(43) Date of publication:
**12.08.2026 Bulletin 2026/33**

(21) Application number: **25224770.5**

(22) Date of filing: **18.12.2025**

(51) International Patent Classification (IPC):
***G06Q 30/0242*** *(2023.01)*

(52) Cooperative Patent Classification (CPC):
**G06Q 30/0242;** G06Q 30/0201

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **07.02.2025 IN 202521010552**

(71) Applicant: **Tata Consultancy Services Limited**
**Maharashtra (IN)**

(72) Inventors:
- **SHESHACHALA, Mithun Basaralu**
  **560066 Bengaluru, Karnataka (IN)**
- **VARGHESE, Tince**
  **695581 Trivandrum, Kerala (IN)**
- **KARMAKAR, Somnath**
  **700160 Kolkata, West Bengal (IN)**
- **GAVAS, Rahul Dasharath**
  **560066 Bengaluru, Karnataka (IN)**
- **RAMAKRISHNAN, Ramesh Kumar**
  **560066 Bengaluru, Karnataka (IN)**
- **PAL, Arpan**
  **700160 Kolkata, West Bengal (IN)**

(74) Representative: **Goddar, Heinz J.**
**Boehmert & Boehmert**
**Anwaltspartnerschaft mbB**
**Pettenkoferstrasse 22**
**80336 München (DE)**

(54) **METHOD AND SYSTEM FOR VISUAL ATTENTION BASED USER INTEREST PREDICTION IN ADVERTISEMENTS**

(57) Existing approaches for determining user interest in advertisements being displayed have the disadvantages related to complexity, scalability, and so on. Method and system disclosed herein obtain a video of a user, and further processes to generate an attention series data representing a plurality of visual attention values of the subject, based on an Eye Aspect Ratio (EAR) and a Blink Rate Variability (BRV) score. Further, a fluctuation matrix comprising a plurality of attention states of the subject is generated. Further, an attention stability frequency score representing frequency of oscillations in the attention series data is generated, and then an attention stability power score representing an intensity of occurrence of attention values in the attention series data is generated. The attention stability frequency score and the attention stability power score are fused to generate a like-dislike score indicating an interest of the subject in the advertisement being played.

Attention Signal (α)
Camera
Quantized attention signal (A)
Attention stability frequency score (Ψ)
Attention stability power score (β)
Like/dislike score and verdict
Customer interest prediction in advertisements

FIG. 1B

EP 4 790 629 A1

## Description

CROSS-REFERENCE TO RELATED APPLICATIONS AND PRIORITY

The present application claims priority to Indian application no. 202521010552, filed on February 07, 2025.

TECHNICAL FIELD

The disclosure herein generally relates to video processing, and, more particularly, to a method and system for visual attention based user interest prediction in advertisements, using video processing.

BACKGROUND

In today's fast-paced and competitive market, understanding consumer preferences is essential for crafting impactful advertising campaigns. The success of these campaigns depends on the ability to capture attention, evoke emotions, and foster brand loyalty, all of which rely on accurately determining whether consumers liked or disliked the content. This challenge is particularly critical in the fields of advertising and neuromarketing, where consumer preferences shape marketing strategies, influence brand perception, and drive business growth. By effectively identifying these preferences, businesses can optimize their advertising efforts, costs and improve conversion rate. Consumer responses to advertisements are essential for several reasons. Advertisements that align with consumer preferences create stronger emotional connections, foster brand loyalty, and encourage repeat business. Emotional resonance further enhances the effectiveness of ads, leaving lasting impressions and influencing purchasing decisions. Moreover, accurate assessment of consumer preferences provides businesses with a competitive advantage by enabling them to differentiate their strategies in a crowded market.

Traditional approaches to evaluating customer interest in advertisements, such as surveys and focus groups, have inherent limitations. These methods are conscious self-reported data, which is often biased as participants may struggle to accurately articulate their emotions or preferences. Such limitations have led researchers to explore alternative methods that leverage psycho-physiological and cognitive behavioral signals, which can reveal sub-conscious behavior, providing more objective insights into consumer behavior.

Some other existing approaches use Electroencephalography (EEG) based mechanism for monitoring customers and for determining customer interest in advertisements. However, this approach still requires refinement for practical deployment. Some other existing approaches employ multimodal systems to improve preference prediction. Behavioral indicators, particularly gaze patterns, have also been extensively studied. The gaze bias effect, where individuals tend to look longer at stimuli they prefer, has been observed across various contexts. Furthermore, some other approaches use eye tracking, computational modeling, and pupillometry to study how celebrity endorsements influence consumer choices by altering evidence accumulation processes. Emotional states also play a significant role, where consumer anxiety and cognitive fluency influenced attitudes toward assertive advertisements. Despite the valuable insights provided by these methods, they are not without limitations. EEG and other neuroimaging techniques require expensive and cumbersome equipment, making them impractical for large-scale use. The obtrusiveness of wearable sensors, such as EEG caps, can influence participants' natural behavior, raising concerns about ecological validity. Additionally, many of these approaches are confined to controlled laboratory environments, limiting their scalability for real-world applications. While multimodal systems offer enhanced predictive power, their complexity and cost make them less accessible for widespread deployment.

SUMMARY

Embodiments of the present disclosure present technological improvements as solutions to one or more of the above-mentioned technical problems recognized by the inventors in conventional systems. For example, in one embodiment, a processor implemented method is provided. The method includes: collecting, via one or more hardware processors, a video of a subject as input data, wherein the video is of the subject gazing at a screen in which an advertisement is being played; generating, via the one or more hardware processors, an attention series data representing a plurality of visual attention values of the subject, for the input data, comprising: computing an Eye Aspect Ratio (EAR) for each of a plurality of frames of the video, using one or more landmarks around eyes of the subject, wherein the EAR computed for the plurality of frames form an EAR series; and computing a Blink Rate Variability (BRV) score, by estimating a plurality of blink onsite times from the input data; quantizing, via the one or more hardware processors, the attention series data into a binary sequence data; generating, via the one or more hardware processors, a fluctuation matrix comprising a plurality of attention states of the subject, wherein the plurality of attention states are identified from a plurality of binary fluctuations between an elevated attention state and a low attention state, of the subject, identified from the binary

sequence data; generating, via the one or more hardware processors, an attention stability frequency score representing frequency of oscillations in the attention series data by aggregating the plurality of attention states in the fluctuation matrix; generating, via the one or more hardware processors, an attention stability power score representing an intensity of occurrence of attention values in the attention series data by aggregating a probability of occurrence of the attention values over an overall probability value; and generating, by fusing the attention stability frequency score and the attention stability power score, via the one or more hardware processors, a like-dislike score, wherein the like-dislike score indicates an interest of the subject in the advertisement being played.

In an aspect of the method, the plurality of binary fluctuations between the elevated attention state and the low attention state is determined with reference to a threshold of attention value.

In another aspect of the method, generating the attention stability frequency score comprises: dividing the attention series data in a moving window of 2 values, to generate a plurality of segments of the attention series data; assigning each of the plurality of segments to one of four pre-defined classes, to generate the plurality of attention states, wherein the four classes represent different attention states; and generates the attention stability frequency score by aggregating the plurality of attention states.

In an aspect of the method, the interest of the subject indicates that the subject likes or dislikes the advertisement being played.

In another aspect, a system is provided. The system includes one or more hardware processors, a communication interface, and a memory storing a plurality of instructions. The plurality of instructions cause the one or more hardware processors to: collect a video of a subject as input data, wherein the video is of the subject gazing at a screen in which an advertisement is being played; generate an attention series data representing a plurality of visual attention values of the subject, for the input data, comprising: computing an Eye Aspect Ratio (EAR) for each of a plurality of frames of the video, using one or more landmarks around eyes of the subject, wherein the EAR computed for the plurality of frames form an EAR series; and computing a Blink Rate Variability (BRV) score, by estimating a plurality of blink onsite times from the input data; quantize the attention series data into a binary sequence data; generate a fluctuation matrix comprising a plurality of attention states of the subject, wherein the plurality of attention states are identified from a plurality of binary fluctuations between an elevated attention state and a low attention state, of the subject, identified from the binary sequence data; generate an attention stability frequency score representing frequency of oscillations in the attention series data by aggregating the plurality of attention states in the fluctuation matrix; generate an attention stability power score representing an intensity of occurrence of attention values in the attention series data by aggregating a probability of occurrence of the attention values over an overall probability value; and generate, by fusing the attention stability frequency score and the attention stability power score, a like-dislike score, wherein the like-dislike score indicates an interest of the subject in the advertisement being played.

In an aspect of the system, the one or more hardware processors are configured to determine the plurality of binary fluctuations between the elevated attention state and the low attention state with reference to a threshold of attention value.

In another aspect of the system, the one or more hardware processors are configured to generate the attention stability frequency score by: dividing the attention series data in a moving window of 2 values, to generate a plurality of segments of the attention series data; assigning each of the plurality of segments to one of four pre-defined classes, to generate the plurality of attention states, wherein the four classes represent different attention states; and generates the attention stability frequency score by aggregating the plurality of attention states.

In another aspect of the system, the interest of the subject indicates that the subject likes or dislikes the advertisement being played.

In yet another aspect, one or more non-transitory computer readable medium are provided. The one or more non-transitory computer readable medium include a plurality of instructions, which when executed, cause one or more hardware processors to: collect a video of a subject as input data, wherein the video is of the subject gazing at a screen in which an advertisement is being played; generate an attention series data representing a plurality of visual attention values of the subject, for the input data, comprising: computing an Eye Aspect Ratio (EAR) for each of a plurality of frames of the video, using one or more landmarks around eyes of the subject, wherein the EAR computed for the plurality of frames form an EAR series; and computing a Blink Rate Variability (BRV) score, by estimating a plurality of blink onsite times from the input data; quantize the attention series data into a binary sequence data; generate a fluctuation matrix comprising a plurality of attention states of the subject, wherein the plurality of attention states are identified from a plurality of binary fluctuations between an elevated attention state and a low attention state, of the subject, identified from the binary sequence data; generate an attention stability frequency score representing frequency of oscillations in the attention series data by aggregating the plurality of attention states in the fluctuation matrix; generate an attention stability power score representing an intensity of occurrence of attention values in the attention series data by aggregating a probability of occurrence of the attention values over an overall probability value; and generate, by fusing the attention stability frequency score and the attention stability power score, a like-dislike score, wherein the like-dislike score indicates an interest of the subject in the advertisement being played.

In an aspect of the one or more non-transitory computer readable medium, the one or more hardware processors are configured to determine the plurality of binary fluctuations between the elevated attention state and the low attention state with reference to a threshold of attention value.

In another aspect of the one or more non-transitory computer readable medium, the one or more hardware processors are configured to generate the attention stability frequency score by: dividing the attention series data in a moving window of 2 values, to generate a plurality of segments of the attention series data; assigning each of the plurality of segments to one of four pre-defined classes, to generate the plurality of attention states, wherein the four classes represent different attention states; and generates the attention stability frequency score by aggregating the plurality of attention states.

In another aspect of the one or more non-transitory computer readable medium, the interest of the subject indicates that the subject likes or dislikes the advertisement being played.

It is to be understood that both the foregoing general description and the following detailed description are exemplary and explanatory only and are not restrictive of the invention, as claimed.

## BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1A illustrates an exemplary system for visual attention based user interest prediction in advertisements, according to some embodiments of the present disclosure.

FIG. 1B is a functional flow diagram of the visual attention based user interest prediction in advertisements, using the system of FIG. 1A, according to some embodiments of the present disclosure.

FIGS. 2A and 2B is a flow diagram depicting steps involved in the process of visual attention based user interest prediction in advertisements, using the system of FIG. 1A, according to some embodiments of the present disclosure.

FIG. 3 is a flow diagram depicting steps involved in the process of generating an attention stability frequency score, for the visual attention based user interest prediction in advertisements, using the system of FIG. 1A, according to some embodiments of the present disclosure.

FIGS. 4 and 5 depict graphs of an experimental data associated with the visual attention based user interest prediction in advertisements, using the system of FIG. 1A, according to some embodiments of the present disclosure.

## DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Various existing approaches used for user monitoring for predicting interest of the users in specific advertisements, such as EEG and other neuroimaging techniques, require expensive and cumbersome equipment, making them impractical for large-scale use. The obtrusiveness of wearable sensors, such as EEG caps, can influence participants' natural behavior, raising concerns about ecological validity. Additionally, many of these approaches are confined to controlled laboratory environments, limiting their scalability for real-world applications. While multimodal systems offer enhanced predictive power, their complexity and cost make them less accessible for widespread deployment.

To address these challenges, a processor implemented method is provided. In this method, by processing a video of a subject, an attention series data representing a plurality of visual attention values of the subject, is generated based on a computed Eye Aspect Ratio (EAR) and a computed Blink Rate Variability (BRV) score. The attention series data is then quantized into a binary sequence data, and then a fluctuation matrix comprising a plurality of attention states of the subject is generated. Based on the fluctuation matrix, an attention stability frequency score representing frequency of oscillations in the attention series data is generated by aggregating a plurality of attention states in the fluctuation matrix. Further, an attention stability power score representing an intensity of occurrence of attention values in the attention series data is generated by aggregating a probability of occurrence of the attention values over an overall probability value. Further, by fusing the attention stability frequency score and the attention stability power score, a like-dislike score is generated, which indicates an interest of the subject in the advertisement being played. This approach addresses the aforementioned challenges of the state of the art approaches, by facilitating a non-obtrusive monitoring and interest prediction of the subject. Further, the approach relies on video processing, which is relatively simpler and less expensive as compared to the state of the art approaches. This approach can be scaled to support any number of users who need to be monitored and assessed.

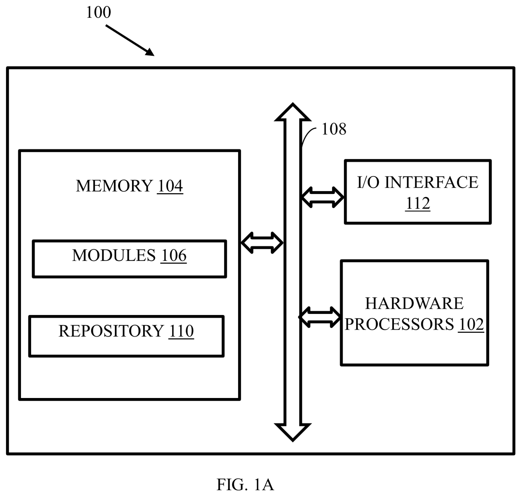

Referring now to the drawings, and more particularly to FIG. 1A through FIG. 5, where similar reference characters denote corresponding features consistently throughout the figures, there are shown preferred embodiments and these embodiments are described in the context of the following exemplary system and/or method.

FIG. 1A illustrates an exemplary system for visual attention based user interest prediction in advertisements, according to some embodiments of the present disclosure.

The system 100 includes or is otherwise in communication with hardware processors 102, at least one memory such as a memory 104, an I/O interface 112. The hardware processors 102, memory 104, and the Input /Output (I/O) interface 112 may be coupled by a system bus such as a system bus 108 or a similar mechanism. In an embodiment, the hardware processors 102 can be one or more hardware processors.

The I/O interface 112 may include a variety of software and hardware interfaces, for example, a web interface, a graphical user interface, and the like. The I/O interface 112 may include a variety of software and hardware interfaces, for example, interfaces for peripheral device(s), such as a keyboard, a mouse, an external memory, a printer and the like. Further, the I/O interface 112 may enable the system 100 to communicate with other devices, such as web servers, and external databases.

The I/O interface 112 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface 112 may include one or more ports for connecting several computing systems with one another or to another server computer. The I/O interface 112 may include one or more ports for connecting several devices to one another or to another server.

The one or more hardware processors 102 may be implemented as one or more microprocessors, microcomputers, microcontrollers, digital signal processors, central processing units, node machines, logic circuitries, and/or any devices that manipulate signals based on operational instructions. Among other capabilities, the one or more hardware processors 102 is configured to fetch and execute computer-readable instructions stored in the memory 104.

The memory 104 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes. In an embodiment, the memory 104 includes a plurality of modules 106.

The plurality of modules 106 include programs or coded instructions that supplement applications or functions performed by the system 100 for executing different steps involved in the process of the user monitoring and interest prediction, being performed by the system of FIG. 1A. The plurality of modules 106, amongst other things, can include routines, programs, objects, components, and data structures, which performs particular tasks or implement particular abstract data types. The plurality of modules 106 may also be used as, signal processor(s), node machine(s), logic circuitries, and/or any other device or component that manipulates signals based on operational instructions. Further, the plurality of modules 106 can be used by hardware, by computer-readable instructions executed by the one or more hardware processors 102, or by a combination thereof. The plurality of modules 106 can include various sub-modules (not shown). The plurality of modules 106 may include computer-readable instructions that supplement applications or functions performed by the system 100 for the user monitoring and interest prediction.

The data repository (or repository) 110 may include a plurality of abstracted piece of code for refinement and data that is processed, received, or generated as a result of the execution of the plurality of modules in the module(s) 106.

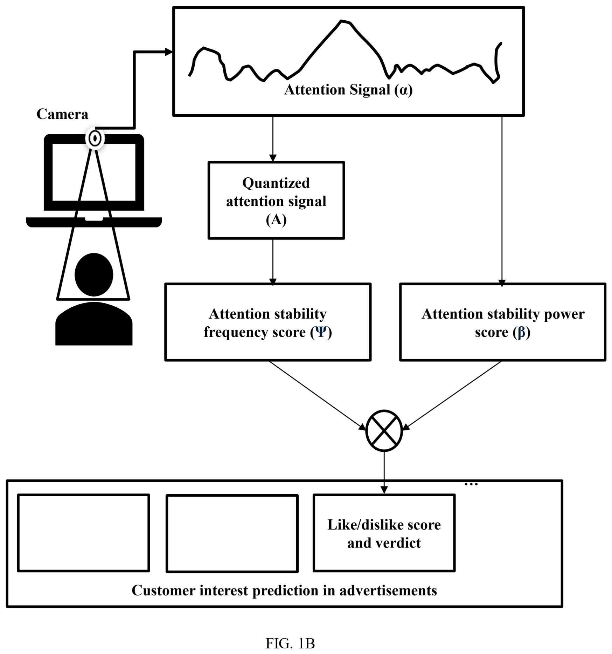

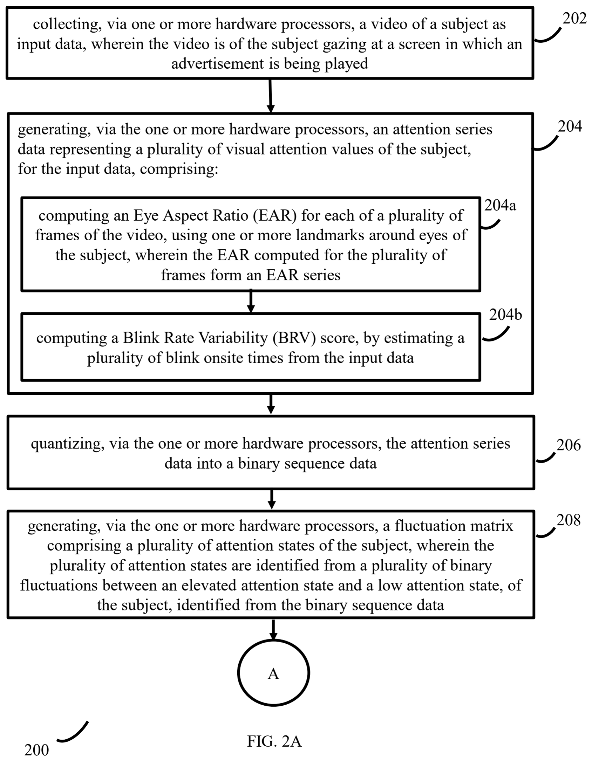

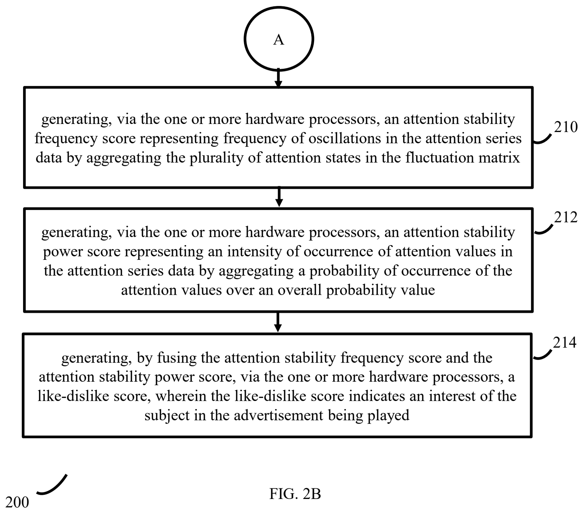

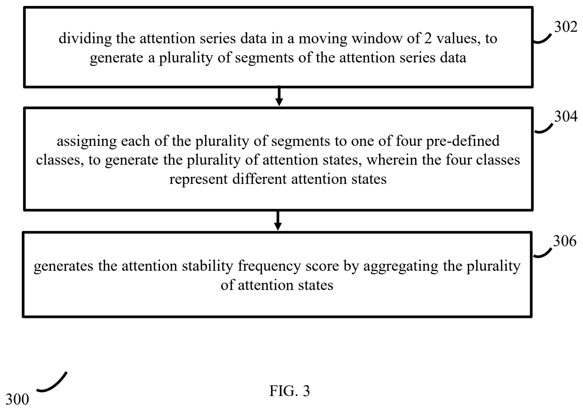

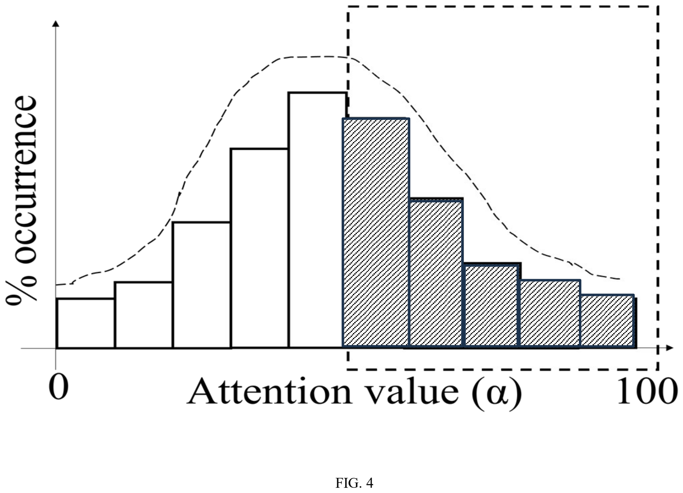

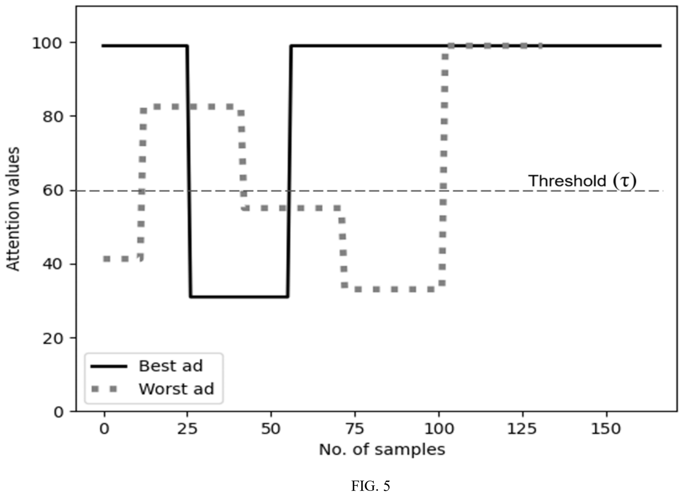

Although the data repository 110 is shown internal to the system 100, it will be noted that, in alternate embodiments, the data repository 110 can also be implemented external to the system 100, where the data repository 110 may be stored within a database (repository 110) communicatively coupled to the system 100. The data contained within such external database may be periodically updated. For example, new data may be added into the database (not shown in FIG. 1A) and/or existing data may be modified and/or non-useful data may be deleted from the database. In one example, the data may be stored in an external system, such as a Lightweight Directory Access Protocol (LDAP) directory and a Relational Database Management System (RDBMS). Functions of the components of the system 100 are now explained with reference to the functional block diagram in FIG. 1B, the flow diagrams in FIGS. 2 and 3, and the graphs in FIGS. 4 and 5.

FIGS. 2A and 2B (collectively referred to as FIG. 2) is a flow diagram depicting steps involved in the process of visual attention based user interest prediction in advertisements, using the system of FIG. 1A, according to some embodiments of the present disclosure.

In an embodiment, the system 100 comprises one or more data storage devices or the memory 104 operatively coupled to the processor(s) 102 and is configured to store instructions for execution of steps of the method 200 by the processor(s) or one or more hardware processors 102. The steps of a method 200 of the present disclosure will now be explained with reference to the components or blocks of the system 100 as depicted in FIG. 1 and the steps of flow diagram as depicted in FIG. 2. Although process steps, method steps, techniques or the like may be described in a sequential order, such processes, methods, and techniques may be configured to work in alternate orders. In other words, any sequence or order of steps that may be described does not necessarily indicate a requirement that the steps to be performed in that

order. The steps of processes described herein may be performed in any order practical. Further, some steps may be performed simultaneously.

At step 202 of the method 200, the system 100 collects, via the one or more hardware processors 102, a video of a subject as input data. The video is of the subject gazing at a screen in which an advertisement is being played, as depicted in FIG. 1B. The video is captured in real-time, using one or more camera. The one or more cameras may be integrated into the screen on which the advertisement is being played, or may be external to the screen and are connected to the system 100 or the screen, via one or more suitable interfaces 112. In an embodiment, to improve the chances of the user gazing at the screen while the advertisement is displayed, prior to displaying the advertisement, in a baseline period of a fixed duration, for example, 2 minutes, the user is made to stare at the screen by displaying a particular symbol (for example, + symbol). In an embodiment, the term 'user' herein refers to an individual to whom the advertisement is being played to. The video is then analyzed using a suitable technique, for example, using a using a deep learning library named Mediapipe, to extract a plurality of face and eye landmarks of the user.

Further, at step 204 of the method 200, an attention series data representing a plurality of visual attention values of the subject is generated, via the one or more hardware processors 102, for the input data. Various steps involved in the process of generating the attention series data are depicted in steps 304a and 304b. At step 304a, the system 100 computes an Eye Aspect Ratio (EAR) for each of a plurality of frames of the advertisement being played on the screen, using one or more landmarks around eyes of the subject. These facial landmarks are the 2D coordinates of different portions of human face like eyes, nose, and so on, that may be obtained using any suitable technique. For example, a dLib toolkit can be used to obtain the one or more landmarks. The EAR computed for the plurality of frames form an EAR series. The EAR is a value computed per image frame which characterizes the ratio of open eye height to its width. A completely open eye yields a higher value of EAR while a closed eye results in lower EAR values. By comparing these values with a threshold, the system 100 detects the onset of eye blinks using frames of eye images. EAR for $i^{th}$ frame is computed as:

$$EAR_i = \frac{\left|P_{2_i} - P_{6_i}\right| + \left|P_{3_i} - P_{5_i}\right|}{2 * \left|P_{1_i} - P_{4_i}\right|} \quad \text{--- (1)}$$

*where,* $P_{j_i}$ corresponds to $j^{th}$ facial landmark for a given frame $i \in \{1, 2, 3 \ldots N\}$ image frames.

Further, at step 204b, the system 100 computes a Blink Rate Variability (BRV) score, by estimating a plurality of blink onsite times from the input data. Given a timeseries of blink onset time values, a new timeseries comprising inter blink intervals is constructed and is termed as blink rate variability signals. It is seen that when a person is in a highly attentive state, the inter blink intervals becomes constant. This results in the BRV frequency components being compact in a fixed band. Likewise, when a person is not attentive, the coherency in the inter blink events is lost, thereby the frequency components span larger bins in the frequency domain. Using this notion of frequency changes, a visual attention score is computed by considering this variability in the target frequency bins. The system 100 may use such a thresholding technique for computing the BRV score. The EAR series and the BRV score, for the plurality of frames of the input data, and is represented as $\alpha$.

Further, at step 206 of the method 200, the system 100 quantizes, via the one or more hardware processors, the attention series data into a binary sequence data, as:

$$\mathbb{A}_t = \begin{cases} 1, & if\ \alpha_t \geq \delta \\ 0, & otherwise \end{cases} \quad \text{--- (2)}$$

where, $\delta$ is a threshold of attention value. The system 100 used the value $\delta$ to divide the attention level into two levels - an elevated attention level (alternately referred to as "elevated attention state"), and a low attention level (alternately referred to as "low attention state"). Attention values that are smaller than $\delta$ are considered to be in the low attention level, and the attention values that are higher than $\delta$ are considered to be in the elevated attention level. It was experimentally found that 60 is optimal value of $\delta$ to satisfy requirements, however, the value may be changed and reconfigured as per needs.

Further, at step 208 of the method 200, the system 100 generates, via the one or more hardware processors 102, a fluctuation matrix comprising a plurality of attention states of the subject. The plurality of attention states are identified from a plurality of binary fluctuations between an elevated attention state and a low attention state, of the subject, identified from the binary sequence data. To generate the fluctuation matrix, the system 100 defines an index of attention stability (in temporal domain) on the quantized binary attention sequences $\mathbb{A}$ through quantification of possible fluctuations in the data, which is $2^N$, where $N$ takes two values - elevated (1) or low (0) attention. Since $N$ takes 2 values, the number of possible combinations is 4. The fluctuation matrix keeps track of every possible fluctuation considering the attention values $\mathbb{A}$, at time instances $t$ and $t + 1$. The fluctuation matrix is represented as:

In this fluctuation matrix, four classes are covered, i.e., $\theta_{01}$, $\theta_{10}$, $\theta_{00}$, and $\theta_{11}$, which represent four possible states of the attention levels. The states $\theta_{01}$, $\theta_{10}$ represent instability in attention, whereas $\theta_{00}$, $\theta_{11}$ represent steady attention states, though $\theta_{00}$ corresponds to lower attention state. From this, at step 210 of the method 200, the system 100 generates an attention stability frequency score $\psi$ representing frequency of oscillations in the attention series data by aggregating the plurality of attention states in the fluctuation matrix, and is represented as:

$$\psi = 1 - \frac{\sum_{i=0}^{M} \theta_{01_i} + \sum_{i=0}^{M} \theta_{10_i}}{\sum_{i=0}^{M} \theta_{00_i} + \sum_{i=0}^{M} \theta_{01_i} + \sum_{i=0}^{M} \theta_{10_i} + \sum_{i=0}^{M} \theta_{11_i}} \quad \text{---- (3)}$$

Higher the value of $\psi$, lesser is the fluctuation in attention which is an indication of stability in attention termed as sustained visual attention. Smaller values of $\Psi$ indicates instability in focusing or maintaining a steady attention level.

Further, at step 212 of the method 200, generates, via the one or more hardware processors 102, an attention stability power score representing an intensity of occurrence of attention values in the attention series data. The attention stability power score is calculated by aggregating a probability of occurrence of the attention values over an overall probability value. A sample distribution of attention values $\alpha$ are shown in FIG. 4. The attention values above the threshold $\delta$ are highlighted using line patterns. To incorporate the essence of the occurrence of attention, the attention stability power score is generated as:

$$\beta = \sum_{i=0}^{P} \mathcal{P}\,(\alpha_i \geq \delta) \quad \text{--- (4)}$$

where, $\mathcal{P}$ (. ) represents probability of occurrence of the attention value $\alpha$ over the entire probability *P*.

Further, at step 214 of the method 200, the system 100 generates, by fusing the attention stability frequency score and the attention stability power score, via the one or more hardware processors 102, a like-dislike score *S*, which indicates an interest of the subject in the advertisement being played.

$$S = \omega_1 * \psi + \omega_2 * \beta \quad \text{--- (5)}$$

where, $\omega_1$, $\omega_2$ are weights that are derived such that they satisfy the objective function,

$$min_{\omega_1,\omega_2,\tau}\{1 - \mathcal{F}\,(S)\} \quad \text{--- (6)}$$

where, $\mathcal{F}$ is a learnt model that returns classification performance in terms of accuracy in the range [0, 1] of accurately classifying the score *S* into like or dislike, for the advertisement being played on the screen. Here, the interest of the subject indicates that the subject likes or dislikes the advertisement being played.

Through experimental and empirical analysis, value of $\omega_1$, $\omega_2$ is determined as ½, and that of $\tau$ as equal to 60. Hence, (5) can be rewritten as:

$$S = 1/2 * \psi + 1/2 * \beta \quad \text{--- (7)}$$

As S is a value $\in$ [0, 100], $\tau$ divides *S* into 2 classes, i.e., like and dislike, as:

$$Verdict = \begin{cases} Like, & if\ S \geq \tau \\ Dislike, & otherwise \end{cases} \quad \text{--- (8)}$$

The predicted interest of the user, i.e., like/dislike, maybe used for various applications, as maybe required. For example, this data acts as a feedback, indicating that the user liked or disliked the displayed advertisement, and in turn preferences or interests of the user, and may help in planning future advertisements that are to be displayed to the user, i.e., targeted advertisements.

Experimental Data:

a. Analysis of $\psi$, $\beta$ in the context of like/dislike classification:

Partial dependence plots are useful for interpreting complex machine learning models by providing insight into the relationships between specific features and the predicted outcome. One-way partial dependence plots show the relationship between a specific feature and the predicted outcome, while controlling for all other features. Twoway partial dependence plots visualize the interaction between two features and the predicted outcome. The one-way and the two-way partial dependence plots (not shown) computed on the features $\Psi$ and $\beta$, for decision tree (DT), gaussian naive bayes (GNB) and k-nearest neighbor (kNN) classifiers, demonstrated a clear relationship between these variables and the predicted outcome for the different classifiers. The interaction between the two features are evident in the two-way partial dependence plots as shown in the figures: with a higher value of $\Psi$ and $\beta$ contributing to the consumer preference for the given advertisement. The plots reveal a notable separation in the partial dependence curves, indicating that our model effectively captures the underlying patterns. As $\Psi$ increases, the predicted values exhibit a significant upward trend, followed by a pronounced inflection point, suggesting a nonlinear relationship. Similarly, the $\beta$ feature displays a steady increase in predicted values, with a marked slope change at higher feature values. These observations suggest that both features contribute meaningfully to the model's predictions. The distinct separation in the partial dependence curves for each feature (as shown by the one-way and the two way plots) underscores the model's ability to discern subtle differences in the data, facilitating accurate predictions.

b. A/B testing scenario generation:

A dataset for analysis is created to simulate an A/B testing scenario. Two categories of advertisements were selected. The categories selected are 'Best' and 'Worst' as per the ratings provided in different sources , for example, Brand Equity.

Two advertisement videos, one from each category was selected and shown to four participants. Video data of the participant's face is collected using webcam. This data was then used to extract the eye blink information for the reconstruction of blink rate variability signal followed by quantified visual attention in the range [0, 100]. Further, the like/dislike index was estimated as detailed in equation 7 followed by the verdict as per equation 8.

c. Results And Discussions

FIG. 5 shows a sample attention time series $\alpha$ for two categories of advertisements shown to a participant. It is to be observed that in case of 'Best' category advertisement, the attention signal has more stability and larger amount of attention data in elevated attention range [60, 100]. The reverse was seen in case of 'Worst' category advertisement viewing, wherein the attention series comprises of instability and most of the attention values are concentrated in the lower attention range [0, 60].

Table I shows the performance of the proposed approach in classifying a given advertisement into 'Like' or 'Dislike' which is in line to the notion of 'Best' versus 'Worst' advertisement. It is to be noted that the method 200 obtained a 100% accuracy

in classifying the advertisement category as perceived by the participants and as found by the Brand Equity respondents.

Table I

| Participant ID | Prediction Score (S) | System Prediction (Verdict) | Ground Truth | S |
|---|---|---|---|---|
| Sub1 | 0.77 | Like | Best | Yes |
| | 0.54 | Dislike | Worst | Yes |

(continued)

| Participant ID | Prediction Score (S) | System Prediction (Verdict) | Ground Truth | S |
|---|---|---|---|---|
| Sub2 | 0.68 | Like | Best | Yes |
| | 0.52 | Dislike | Worst | Yes |
| Sub3 | 0.67 | Like | Best | Yes |
| | 0.53 | Dislike | Worst | Yes |
| Sub4 | 0.72 | Like | Best | Yes |
| | 0.49 | Dislike | Worst | Yes |

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein address unresolved problem of user monitoring for predicting user interest in advertisements being played. The embodiment, thus provides a mechanism for unobtrusive user monitoring for predicting user interest in advertisements being played. Moreover, the embodiments herein further provide a video analysis based user monitoring for predicting user interest in advertisements being played.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs,

DVDs, flash drives, disks, and any other known physical storage media.

It is intended that the disclosure and examples be considered as exemplary only, with a true scope of disclosed embodiments being indicated by the following claims.

## Claims

**1.** A processor implemented method (200), comprising:

collecting (202), via one or more hardware processors, a video of a subject as input data, wherein the video is of the subject gazing at a screen in which an advertisement is being played;
generating (204), via the one or more hardware processors, an attention series data representing a plurality of visual attention values of the subject, for the input data, comprising:

computing (204a) an Eye Aspect Ratio (EAR) for each of a plurality of frames of the video, using one or more landmarks around eyes of the subject, wherein the EAR computed for the plurality of frames form an EAR series; and
computing (204b) a Blink Rate Variability (BRV) score, by estimating a plurality of blink onsite times from the input data;

quantizing (206), via the one or more hardware processors, the attention series data into a binary sequence data;
generating (208), via the one or more hardware processors, a fluctuation matrix comprising a plurality of attention states of the subject, wherein
the plurality of attention states are identified from a plurality of binary fluctuations between an elevated attention state and a low attention state, of the subject, identified from the binary sequence data;
generating (210), via the one or more hardware processors, an attention stability frequency score representing frequency of oscillations in the attention series data by aggregating the plurality of attention states in the fluctuation matrix;
generating (212), via the one or more hardware processors, an attention stability power score representing an intensity of occurrence of attention values in the attention series data by aggregating a probability of occurrence of the attention values over an overall probability value; and
generating (214), by fusing the attention stability frequency score and the attention stability power score, via the one or more hardware processors, a like-dislike score, wherein the like-dislike score indicates an interest of the subject in the advertisement being played.

**2.** The processor implemented method as claimed in claim 1, wherein the plurality of binary fluctuations between the elevated attention state and the low attention state is determined with reference to a threshold of attention value.

**3.** The processor implemented method as claimed in claim 1, wherein generating the attention stability frequency score comprises:

dividing (302) the attention series data in a moving window of 2 values, to generate a plurality of segments of the attention series data;
assigning (304) each of the plurality of segments to one of four pre-defined classes, to generate the plurality of attention states, wherein the four classes represent different attention states; and
generates (306) the attention stability frequency score by aggregating the plurality of attention states.

**4.** The processor implemented method as claimed in claim 1, wherein the interest of the subject indicates that the subject likes or dislikes the advertisement being played.

**5.** A system (100), comprising:

one or more hardware processors (102);
a communication interface (112); and
a memory (104) storing a plurality of instructions, wherein the plurality of instructions cause the one or more hardware processors to:

collect a video of a subject as input data, wherein the video is of the subject gazing at a screen in which an

advertisement is being played;
generate an attention series data representing a plurality of visual attention values of the subject, for the input data, comprising:

computing an Eye Aspect Ratio (EAR) for each of a plurality of frames of the video, using one or more landmarks around eyes of the subject, wherein the EAR computed for the plurality of frames form an EAR series; and
computing a Blink Rate Variability (BRV) score, by estimating a plurality of blink onsite times from the input data;

quantize the attention series data into a binary sequence data;
generate a fluctuation matrix comprising a plurality of attention states of the subject, wherein the plurality of attention states are identified from a plurality of binary fluctuations between an elevated attention state and a low attention state, of the subject, identified from the binary sequence data;
generate an attention stability frequency score representing frequency of oscillations in the attention series data by aggregating the plurality of attention states in the fluctuation matrix;
generate an attention stability power score representing an intensity of occurrence of attention values in the attention series data by aggregating a probability of occurrence of the attention values over an overall probability value; and
generate, by fusing the attention stability frequency score and the attention stability power score, a like-dislike score, wherein the like-dislike score indicates an interest of the subject in the advertisement being played.

**6.** The system as claimed in claim 5, wherein the one or more hardware processors are configured to determine the plurality of binary fluctuations between the elevated attention state and the low attention state with reference to a threshold of attention value.

**7.** The system as claimed in claim 5, wherein the one or more hardware processors are configured to generate the attention stability frequency score by:

dividing the attention series data in a moving window of 2 values, to generate a plurality of segments of the attention series data;
assigning each of the plurality of segments to one of four pre-defined classes, to generate the plurality of attention states, wherein the four classes represent different attention states; and
generates the attention stability frequency score by aggregating the plurality of attention states.

**8.** The system as claimed in claim 5, wherein the interest of the subject indicates that the subject likes or dislikes the advertisement being played.

**9.** One or more non-transitory machine-readable information storage mediums comprising one or more instructions which when executed by one or more hardware processors cause:

collecting a video of a subject as input data, wherein the video is of the subject gazing at a screen in which an advertisement is being played;
generating an attention series data representing a plurality of visual attention values of the subject, for the input data, comprising:

computing an Eye Aspect Ratio (EAR) for each of a plurality of frames of the video, using one or more landmarks around eyes of the subject, wherein the EAR computed for the plurality of frames form an EAR series; and
computing a Blink Rate Variability (BRV) score, by estimating a plurality of blink onsite times from the input data;

quantizing the attention series data into a binary sequence data;
generating a fluctuation matrix comprising a plurality of attention states of the subject, wherein the plurality of attention states are identified from a plurality of binary fluctuations between an elevated attention state and a low attention state, of the subject, identified from the binary sequence data;
generating an attention stability frequency score representing frequency of oscillations in the attention series data by aggregating the plurality of attention states in the fluctuation matrix;

generating an attention stability power score representing an intensity of occurrence of attention values in the attention series data by aggregating a probability of occurrence of the attention values over an overall probability value; and

generating by fusing the attention stability frequency score and the attention stability power score, via the one or more hardware processors, a like-dislike score, wherein the like-dislike score indicates an interest of the subject in the advertisement being played.

**10.** The one or more non-transitory machine-readable information storage mediums as claimed in claim 9, wherein the plurality of binary fluctuations between the elevated attention state and the low attention state is determined with reference to a threshold of attention value.

**11.** The one or more non-transitory machine-readable information storage mediums as claimed in claim 9, wherein generating the attention stability frequency score comprises:

dividing the attention series data in a moving window of 2 values, to generate a plurality of segments of the attention series data;

assigning each of the plurality of segments to one of four pre-defined classes, to generate the plurality of attention states, wherein the four classes represent different attention states; and

generates the attention stability frequency score by aggregating the plurality of attention states.

**12.** The one or more non-transitory machine-readable information storage mediums as claimed in claim 9, wherein the interest of the subject indicates that the subject likes or dislikes the advertisement being played.

100
108
MEMORY 104
MODULES 106
REPOSITORY 110
I/O INTERFACE 112
HARDWARE PROCESSORS 102

FIG. 1A

Attention Signal (α)
Camera
Quantized attention signal (A)
Attention stability frequency score (Ψ)
Attention stability power score (β)
Like/dislike score and verdict
...
Customer interest prediction in advertisements

FIG. 1B

collecting, via one or more hardware processors, a video of a subject as input data, wherein the video is of the subject gazing at a screen in which an advertisement is being played
202
generating, via the one or more hardware processors, an attention series data representing a plurality of visual attention values of the subject, for the input data, comprising:
204
computing an Eye Aspect Ratio (EAR) for each of a plurality of frames of the video, using one or more landmarks around eyes of the subject, wherein the EAR computed for the plurality of frames form an EAR series
204a
computing a Blink Rate Variability (BRV) score, by estimating a plurality of blink onsite times from the input data
204b
quantizing, via the one or more hardware processors, the attention series data into a binary sequence data
206
generating, via the one or more hardware processors, a fluctuation matrix comprising a plurality of attention states of the subject, wherein the plurality of attention states are identified from a plurality of binary fluctuations between an elevated attention state and a low attention state, of the subject, identified from the binary sequence data
208
A
200

FIG. 2A

A
generating, via the one or more hardware processors, an attention stability frequency score representing frequency of oscillations in the attention series data by aggregating the plurality of attention states in the fluctuation matrix
210
generating, via the one or more hardware processors, an attention stability power score representing an intensity of occurrence of attention values in the attention series data by aggregating a probability of occurrence of the attention values over an overall probability value
212
generating, by fusing the attention stability frequency score and the attention stability power score, via the one or more hardware processors, a like-dislike score, wherein the like-dislike score indicates an interest of the subject in the advertisement being played
214
200

FIG. 2B

dividing the attention series data in a moving window of 2 values, to generate a plurality of segments of the attention series data
302
assigning each of the plurality of segments to one of four pre-defined classes, to generate the plurality of attention states, wherein the four classes represent different attention states
304
generates the attention stability frequency score by aggregating the plurality of attention states
306
300

FIG. 3

% occurrence
0
Attention value (α)
100

FIG. 4

100
80
60
40
20
0
Attention values
Threshold (τ)
Best ad
Worst ad
0
25
50
75
100
125
150
No. of samples

FIG. 5

# EUROPEAN SEARCH REPORT

Application Number
EP 25 22 4770

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KARMAKAR SOMNATH ET AL: "Quantification of Active Visual Attention using RGB camera", 2023 45TH ANNUAL INTERNATIONAL CONFERENCE OF THE IEEE ENGINEERING IN MEDICINE & BIOLOGY SOCIETY (EMBC) IEEE, 24 July 2023 (2023-07-24), pages 1-4, XP034488580, DOI: 10.1109/EMBC40787.2023.10340011 [retrieved on 2023-12-11] * abstract * * section "I. INTRODUCTION" * * section "II. PROPOSED APPROACH" * * section "III. RESULTS AND DISCUSSIONS" * ----- | 1-12 | INV. G06Q30/0242 |
| A | WANG HANQIU ET AL: "GAZEploit: Remote Keystroke Inference Attack by Gaze Estimation from Avatar Views in VR/MR Devices", PROCEEDINGS OF THE 27TH ASIA AND SOUTH PACIFIC DESIGN AUTOMATION CONFERENCE ACMPUB27, NEW YORK, NY, USA, 2 December 2024 (2024-12-02), pages 1731-1745, XP059785225, DOI: 10.1145/3658644.3690285 ISBN: 9798400706516 * the whole document * ----- | 1-12 | |

| TECHNICAL FIELDS SEARCHED (IPC) |
|---|
| G06Q |

The present search report has been drawn up for all claims

1

| Place of search | Date of completion of the search | Examiner |
|---|---|---|
| The Hague | 18 May 2026 | Cîrstet, Andrei |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- IN 202521010552